# EUROPÄISCHE PATENTSCHRIFT

(11) **EP 1 403 542 B1**
(45) Veröffentlichungstag und Bekanntmachung des Hinweises auf die Patenterteilung: **18.01.2006**
(21) Anmeldenummer: 02021509.1
(22) Anmeldetag: 26.09.2002
(51) Int. Cl.: F16C 43/06, F16C 41/04, F16C 33/46

(54) **Radial-Wälzlager**
Radial rolling bearing
Palier radial à roulement

(43) Veröffentlichungstag der Anmeldung: 31.03.2004
(73) Patentinhaber: Getrag-Ford Transmissions GmbH, 50735 Köln (DE)
(72) Erfinder: Bernhardt, Udo, 50259 Pulheim (DE)
(74) Vertreter: Drömer, Hans-Carsten

(56) Entgegenhaltungen:
- EP-A- 0 379 869
- DE-A- 2 063 220
- DE-B- 1 286 343
- US-A- 4 907 898
- US-A- 5 482 150

## Beschreibung

Die Erfindung bezieht sich auf ein Radial-Wälzlager und auf ein Verfahren zur Montage und zum Betrieb eines Radial-Wälzlagers gemäß dem Oberbegriff des Patentanspruches 1.

Ein derartiges Wälzlager ist bekannt aus der DE 2063220. Der elastisch verformbare Lagerkäfig weist auf einer Seite einen Käfigbund auf, der mit einem radial nach innen gerichteten Lagerringflansch zusammenwirkt, indem der Lagerkäfig bei der Montage in den Lagerring gesteckt wird und der Bund elastisch hinter dem Lagerring einschnappt. Damit wird für das nicht verbaute Wälzlage das Herausfallen des Lagerkäfigs aus dem Lagerring verhindert. Nachteilig ist an dieser Bauweise, daß der Lagerring eine gewisse Breite aufweisen muß, damit der Bund hinter den Lagerringflansch greifen kann.

Aufgabe der vorliegenden Erfindung ist es, die Montage zu vereinfachen, eine möglichst kompakte Bauweise zu ermöglichen und eine sichere Funktion zu gewährleisten.

Gelöst wird diese Aufgabe mit den Merkmalen des Anspruches 1.

Der Lagerring weist auf nur einer Seite einen radial einwärts gerichteten Lagerringabschnitt auf, wobei seine Innenöffnung zumindest abschnittsweise eine Innenkante und eine Außenkante mit zwei unterschiedlichen Durchmessern aufweist. Dabei ist die Innenkante mit dem kleineren Durchmesser auf der Seite der Wälzkörper angeordnet. Der Lagerkäfig erstreckt sich axial in den Bereich des Lagerringabschnittes, wobei zumindest ein Halteabschnitt des Lagerkäfigs im Bereich des Lagerringabschnittes sich radial weiter nach außen erstreckt als die Innenkante.

Die vereinfachte Montage ergibt sich dadurch, daß bei der Montage der Lagerkäfig, voll bestückt mit allen Wälzkörpern, axial in den Lagerring und dann in die Innenöffnung des Lagerringabschnittes gesteckt werden kann. Der Lagerkäfig ist im Bereich der Halteabschnitte derart elastisch verformbar, das Lagerring und Lagerkäfig unter Krafteinwirkung in Axialrichtung zusammengesteckt bzw. getrennt werden können, ähnlich wie bei einer Rastverbindung. Durch die elastische Verformung können die Halteabschnitte des Lagerkäfigs hinter die Innenkante mit dem kleineren Innendurchmesser greifen und verhindern so beim fertig montierten Radial-Wälzlager das Herausfallen des Lagerkäfigs aus dem Lagerring. Weiterhin werden bei der Montage keine aufwendigen Fügeverfahren benötigt, um den Lagerkäfig im Lagerring zu halten oder um das Radial-Wälzlager zu komplettieren. Weiterhin ist dieses Radial-Wälzlager sehr kompakt aufgebaut, da die Wälzkörper direkt am Lagerringabschnitt anliegen können, und auf der offenen Seite praktisch mit dem Lagerring abschließen. Dies bedeutet, daß die Baulänge des Lagerringes nur unwesentlich höher als die Länge der Wälzkörper ist.

Wesentlicher Vorteil im Betrieb ist, daß, das Radial-Wälzlager einseitig offen ist, da nur ein Lagerringabschnitt benötigt wird, und somit eine bessere Kühlung und Schmierung durch die verbesserte Schmiermittelzufuhr gegeben ist. Zudem ist die über den Umfang gesehen eine in axiale Richtung wirkende, vollständig umlaufende Anlagefläche zwischen Lagerkäfig oder Wälzkörpern und dem Lagerringabschnitt gegeben, wodurch die Funktionsfähigkeit des Radial-Wälzlagers weiter verbessert wird, vor allem die Laufruhe: Eine weitere Verbesserung ergibt sich im laufenden Betrieb, wenn nach einer bestimmten Laufdauer die Halteelemente durch Abrieb abgetragen werden und/oder der Durchmesser an der Innenöffnung des Lagerringabschnittes sich durch Abrieb vergrößert. Dann laufen Lagerkäfig und Lagerring völlig voneinander getrennt mit den bekannten Vorteilen wie Läufruhe und geringer Reibung.

Die unterschiedlichen Durchmesser an der Innenöffnung des Lagerringabschnittes können entweder durch eine schräge Phase an der Innenöffnung des Lagerringabschnittes, oder durch einen umlaufenden Absatz an dei Innenöffnung des Lagerringabschnitt entstehen. Dies ist abhängig vom Fertigungsverfahren des Lagerringes; auf jeden Fall können die unterschiedlichen Durchmesser mit sehr geringem fertigungstechnischen Mehraufwand erzeugt werden.

Bevorzugt wird ein Halteabschnitt durch einen radialen Vorsprung auf dem Lagerkäfig gebildet. Da der Lagerkäfig in der Regel aus einem Kunststofformteil besteht, können die Halteabschnitte sehr einfach am Außenumfang des Lagerkäfigs in Form z.B. von kleinen Höckern oder Nasen angeordnet sein. Von der Form und von der Anzahl sind die Halteabschnitte beliebig, es muß nur sichergestellt sein, daß sie hinter die Innenkante in die Innenöffnung des Lagerringabschnittes greifen, und so ein Herausfallen des Lagerkäfigs aus dem Lagerring verhindern.

In einer weiteren bevorzugten Ausführung ist der Halteabschnitt am Lagerkäfig umlaufend, und der kleine Durchmesser am Innenumfang des Lagerringabschnittes in Umfangsrichtung tritt nur abschnittsweise auf. Eine solche Ausführung entspricht einer umlaufenden Nut auf dem Lagerkäfig, und einzelnen vorstehenden Höckern oder Nasen auf der Innenöffnung im Bereich der Innenkante, die in die Nut auf dem Lagerring greifen. Eine solche Ausführung kann sinnvoll sein, wenn der Lagerkäfig aus einem Metall tiefgezogen ist und damit die Gestaltungsfreiheit des Lagerkäfigs eingeschränkt ist.

Weitere vorteilhafte Ausführungen der Erfindung sind den Zeichnungen zu entnehmen. Es zeigen:
- Figur 1:: Einen Längsschnitt durch ein Radial-Wälzlager;
- Figur 2:: eine Einzelheit Z aus der Figur 1; und
- Figur 3:: die Vorderansicht des Radial-Wälzlagers.

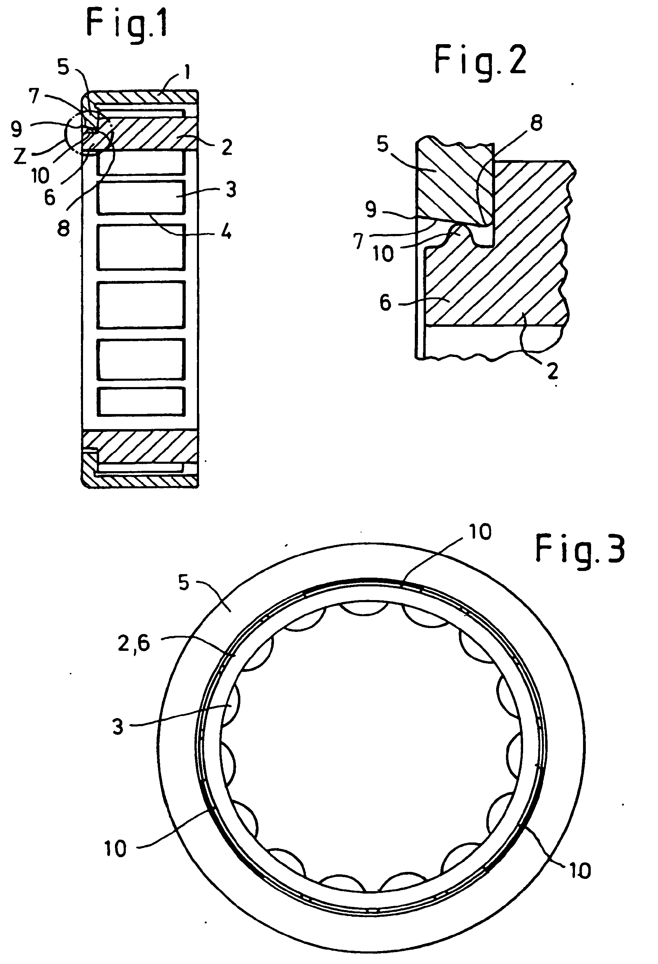

Das in Figur 1 gezeigte Radial-Wälzlager besteht im wesentlichen aus einem Lagerring 1, einem Lagerkäfig 2 und einer Vielzahl, von Wälzkörpern 3, die in Ausschnitten 4 im Lagerkäfig 2 drehbar gehalten sind. An einer Seite weist der Lagerring 2 einen radial einwärts gerichteten Lagerringabschnitt 5 auf.

Ein vergrößerter Ausschnitt der Einzelheit Z mit erfindungsgemäßer Ausgestaltung ist in Figur 2 abgebildet. Ein zylindrischer Flansch 6 des Lagerkäfigs 2 erstreckt sich axial in die Innenöffnung 7 des Lagerringabschnittes 5. Die Innenöffnung 7 weist eine Innenkante 8, welche auf der den Wälzkörpern 3 zugewandten Seite liegt, und eine Außenkante 9 auf, wobei die Innenkante 8 einen kleineren Innendurchmesser hat als die Aüßenkante 9. Zwischen Außenkante 9 und Innenkante 8 ist die Innenöffnung 7 im wesentlich in Form einer Phase angeschrägt. Auf dem Flansch 6 ist als Halteelement eine Wulst 10 angebracht, die so dimensioniert ist, das im fertig montierten Zustand die Wulst 10 in der Innenöffnung 7 hinter der Innenkante 8 zu liegen kommt.

Dadurch können Lagerring 1 und Lagerkäfig 2 bei der Montage einfach ineinander gesteckt werden. Beim Überwinden der Innenkante 8 wird die Wulst 10, die sich radial weiter nach außen erstreckt als die Innenkante 8 mit dem kleineren Innendurchmesser, radial nach innen gedrückt. Diese Verformung wird ermöglicht durch die elastische Nachgiebigkeit des zylindrischen Flansches 6 bzw. des Lagerkäfigs 2. Nach Überwinden der Innenkante 8 legt sich die Wulst 10 an der schrägen Phase der Innenöffnung 7 an, wodurch der Flansch 6 bzw. der Lagerkäfig 2 elastisch in ihre ursprüngliche Form zurückfedern, was sich für den Monteur wie ein Einrasten des Lagerkäfigs 2 im Lagerring 1 bemerkbar macht.

Die Funktion der Wulst 10 besteht im wesentlichen darin, bei der Montage und beim Transport des Radial-Wälzlagers den Lagerkäfig 2 mit den Wälzlagern 3 im Lagerring 1 zu halten. Sobald das Radial-Wälzlager selber eingebaut wurde, z. B. in einem Getriebe oder einem Motor, werden Lagerring 1 und Lagerkäfig 2 durch andere Maschinenteile, die hier nicht dargestellt sind, gehalten und positioniert. Das bedeutet, daß die Halteelemente bzw. hier die Wülste 10 im Betrieb nicht benötigt werden und deshalb auch keine besonders hohen axialen Kräfte ertragen müssen.

Damit können die Wülste 10 sehr klein gehalten werden, was im Betrieb vorteilhaft ist, da die Wülste 10 dann, wenn sich Lagerkäfig 2 und Lagerring 1 gegeneinander drehen, sehr schnell durch Verschleiß abgetragen werden. Wenn aber nach einiger Betriebszeit die Wülste 10 nicht mehr vorhanden sind, erhöht das die Funktionsfähigkeit des Radial-Wälzlagers, insbesondere dessen Leichtgängigkeit.

In Figur 3 ist die Anordnung der Wulst 10 über den Umfang gezeigt. Bevorzugt wird die Wulst 10 gleichmäßig über den Umfang verteilt, hier sind es drei. Je nach Gestaltung kann die Wulst 10 auch umlaufend ununterbrochen angeordnet sein, so daß nur eine Wulst 10 bzw. ein Haltelement vorhanden ist, oder die Wulst 10 kann bei Bedarf in beliebigem Vielfachen am Umfang angeordnet sein, so daß viele Halteelemente vorhanden sind.

## Patentansprüche

1. Verfahren zur Montage und Betrieb eines Radial-Wälzlagers mit einem äußeren Lagerring (1) und mit Wälzkörpern (3), die in einem Lagerkäfig (2) angeordnet sind, wobei
- der Lagerring (1) auf einer Seite einen radial einwärts gerichteten Lagerringabschnitt (5) aufweist,
- der Lagerringabschnitt (5) an seiner Innenöffnung (7) zumindest abschnittsweise eine Innenkante (8) und eine Außenkante (9) mit zwei unterschiedlichen Durchmessern aufweist, wobei die Innenkante (8) mit dem kleineren Durchmesser auf der Seite der Wälzkörper (3) angeordnet ist,
- und der Lagerkäfig (2) sich axial in den Bereich des Lagerringabschnittes (5) erstreckt, wobei zumindest ein Halteabschnitt (10) des Lagerkäfigs (2) im Bereich des Lagerringabschnittes (5) sich radial weiter nach außen erstreckt als die Innenkante (8),
**dadurch gekennzeichnet, daß**
- bei der Montage der Lagerkäfig (2) in den Lagerring (1) gesteckt wird und dort einrastet, indem Halteabschnitte (10) hinter die Innenkante (8) in die Innenöffnung (7) des Lagerringabschnittes (5) greifen, und
- im Betrieb die Halteabschnitte (10) durch Abrieb abgetragen werden oder der Durchmesser an der Innenöffnung (7) sich durch Abrieb vergrößert.

2. Radial-Wälzlager, montiert und betrieben nach dem Verfahren aus Anspruch 1.

3. Radial-Wälzlager nach Anspruch 2,
**dadurch gekennzeichnet, daß**
die unterschiedlichen Durchmesser von Innenkante (8) und Außenkante (9) durch eine schräge Phase an der Innenöffnung (7) des Lagerringabschnittes (5) entstehen.

4. Radial-Wälzlager nach Anspruch 2,
**dadurch gekennzeichnet, daß**
die unterschiedlichen Durchmesser von Innenkante (8) und Außenkante (9) durch einen umlaufenden Absatz an der Innenöffnung (7) des Lagerringabschnittes (5) entstehen.

5. Radial-Wälzlager nach einem der Ansprüche 2 bis 4,
**dadurch gekennzeichnet, daß**
ein Halteabschnitt (10) durch einen radialen Vorsprung auf dem Lagerkäfig (2) gebildet wird.

6. Radial-Wälzlager nach einem der Ansprüche 2 bis 5,
**dadurch gekennzeichnet, daß**
der Halteabschnitt (10) am Lagerkäfig (2) umlaufend ist, und der kleine Durchmesser der Innenkante (8) in der Innenöffnung (7) in Umfangsrichtung nur abschnittsweise auftritt.

7. Radial-Wälzlager nach einem der Ansprüche 2 bis 6,
**dadurch gekennzeichnet, daß**
der Lagerkäfig (2) im Bereich der Halteabschnitte (10) derart elastisch verformbar ist, daß Lagerring (1) und Lagerkäfig (2) unter Krafteinwirkung in Axialrichtung zusammengesteckt bzw. getrennt werden können.

## Claims

1. Method for the assembly and operation of a radial roller bearing having an outer bearing race (1) and rolling elements (3), which are arranged in a bearing cage (2),
- the bearing race (1) on one side having a bearing race section (5) directed radially inwards,
- the bearing race section (5) on its inside opening (7) having, at least in sections, an inner edge (8) and an outer edge (9) of two different diameters, the inner edge (8) being arranged with the smaller diameter on the side of the rolling elements (3),
- and the bearing cage (2) extending axially into the area of the bearing race section (5), at least one retaining section (10) of the bearing cage (2) in the area of the bearing race section (5) extending radially further outwards than the inner edge (8),
**characterized in that**
- in the assembly process the bearing cage (2) is inserted into the bearing race (1) where it engages **in that** retaining sections (10) grip behind the inner edge (8) into the inside opening (7) of the bearing race section (5), and
- in operation, the retaining sections (10) are eroded by abrasion or the diameter on the inside opening (7) increases dues to abrasion.

2. Radial roller bearing, assembled and operated according to the method in Claim 1.

3. Radial roller bearing according to Claim 2, **characterized in that** the different diameters of the inner edge (8) and the outer edge (9) are produced by an inclined phase on the inside opening (7) of the bearing race section (5).

4. Radial roller bearing according to Claim 2, **characterized in that** the different diameters of the inner edge (8) and the outer edge (9) are produced by a circumferential shoulder on the inside opening (7) of the bearing race section (5).

5. Radial roller bearing according to any one of Claims 2 to 4, **characterized in that** a retaining section (10) is formed by a radial projection on the bearing cage (2).

6. Radial roller bearing according to any one of Claims 2 to 5, **characterized in that** the retaining section (10) on the bearing cage (2) is circumferential, and the small diameter of the inner edge (8) in the inside opening (7) occurs in a circumferential direction only in sections.

7. Radial roller bearing according to any one of Claims 2 to 6, **characterized in that** the bearing cage (2) is elastically deformable in the area of the retaining sections (10) in such a way that the bearing race (1) and the bearing cage (2) can be assembled or separated by the action of a force in an axial direction.

## Revendications

1. Procédé de montage et de fonctionnement d'un palier à roulement radial comprenant un anneau de palier externe (1) et des corps de roulement (3) qui sont disposés dans une cage de palier (2), dans lequel :
- l'anneau de palier (1) présente d'un côté une portion d'anneau de palier (5) orientée radialement vers l'intérieur,
- la portion d'anneau de palier (5) présente sur son ouverture interne (7) au moins en partie une arête interne (8) et une arête externe (9) avec deux diamètres différents, l'arête interne (8) de plus petit diamètre étant disposée du côté des corps de roulement (3),
- et la cage de palier (2) s'étend axialement dans la région de la portion d'anneau de palier (5), au moins une portion de retenue (10) de la cage de palier (2) s'étendant dans la région de la portion d'anneau de palier (5) radialement plus loin vers l'extérieur que l'arête interne (8),
**caractérisé en ce que**
- lors du montage, la cage de palier (2) est enfoncée dans l'anneau de palier (1) et y est encliquetée par l'engagement de portions de retenue (10) derrière l'arête interne (8) dans l'ouverture interne (7) de la portion d'anneau de palier (5) et
- lors du fonctionnement, les portions de retenue (10) sont enlevées par usure par frottement ou le diamètre au niveau de l'ouverture interne (7) s'agrandit sous l'effet de l'usure par frottement.

2. Palier à roulement radial, monté et fonctionnant selon le procédé de la revendication 1.

3. Palier à roulement radial selon la revendication 2,
**caractérisé en ce que**
les différents diamètres de l'arête interne (8) et de l'arête externe (9) sont produits par un biseau oblique au niveau de l'ouverture interne (7) de la portion d'anneau de palier (5).

4. Palier à roulement radial selon la revendication 2,
**caractérisé en ce que**
les différents diamètres de l'arête interne (8) et de l'arête externe (9) sont produits par un épaulement périphérique au niveau de l'ouverture interne (7) de la portion d'anneau de palier (5).

5. Palier à roulement radial selon l'une quelconque des revendications 2 à 4,
**caractérisé en ce**
**qu'**une portion de retenue (10) est formée par une saillie radiale sur la cage de palier (2).

6. Palier à roulement radial selon l'une quelconque des revendications 2 à 5,
**caractérisé en ce que**
la portion de retenue (10) est sur la périphérie de la cage de palier (2), et le petit diamètre de l'arête interne (8) n'entre que par portions dans l'ouverture interne (7) dans la direction périphérique.

7. Palier à roulement radial selon l'une quelconque des revendications 2 à 6,
**caractérisé en ce que**
la cage de palier (2) dans la région des portions de retenue (10) est déformable élastiquement de telle sorte que l'anneau de palier (1) et la cage de palier (2) puissent être assemblés ou séparés sous l'effet de l'application d'une force dans la direction axiale.
